# EUROPEAN PATENT APPLICATION

(11) **EP 4 513 374 A1**
(43) Date of publication of application: **26.02.2025**
(21) Application number: 23315326.1
(22) Date of filing: 24.08.2023
(51) Int. Cl.: G06F 40/194, G06F 40/30, G06F 16/00, G06Q 50/18

(54) **DOCUMENT PROCESSING**

(71) Applicant: IVALUA SAS, 91741 Massy Cedex (FR)
(72) Inventor: DO, Xuan Khanh, Massy Cedex 91741 (FR); BENSOUSSAN, Pascal, Massy Cedex 91741 (FR); DUANG, Quang Ngoc, Massy Cedex 91741 (FR)
(74) Representative: EIP

(57) **Abstract**

There is provided a computer implemented method of processing contract documents. The method comprises receiving a segment associated with a received contract document and for the received segment, accessing one or more approved segments to determine an approved segment from the one or more approved segments that is similar to the received segment, wherein the approved segment is determined using a similarity metric between the received segment and at least some of the approved segments. Further processing of the received segment using the determined approved segment.

## Description

### BACKGROUND OF THE INVENTION

### Field of the Invention

The present application relates to contract document processing in which a received segment from a contract document is compared with previously approved segments to enable further processing of the received segment.

### Description of the Related Technology

Preparing, reviewing and negotiating contracts is time consuming and prone to errors which increases risk. Attempts to automate this process have traditionally used template clause language and/or highlighting of differences from such language (so called red lining). However, implementing these approaches may be difficult when the original contract was provided by another party using different templates, or when the other party insists on using different language. Recent generative AI based approaches may save time, but they may also depart from template language requiring additional manual processing.

### SUMMARY

According to a first aspect, there is provided a computer-implemented method of processing contract documents. The method comprises receiving a segment associated with a received contract document; for the received segment of the new contract document, accessing one or more approved segments to determine an approved segment from the one or more approved segments that is similar to the received segment, wherein the approved segment is determined using a similarity metric between the received segment and at least some of the approved segments; and using the determined approved segment for further processing of the received segment.

Corresponding systems and computer program products are also provided.

### BRIEF DESCRIPTION OF THE DRAWINGS

Various features of the present disclosure will be apparent from the detailed description which follows, taken in conjunction with the accompanying drawings, which together illustrate, features of the present disclosure, and wherein:
Fig. 1 is a schematic diagram of a system for processing contract documents, according to an example;
Fig. 2 is a schematic diagram illustrating processing of contract documents, according to an example;
Fig. 3 is a schematic diagram illustrating similarity between a received segment of a contract document and previously approved segments, according to an example.
Fig. 4 is a schematic diagram illustrating clustering of approved segments, according to an example;
Fig. 5 illustrates a display of further processing of the received segment, according to an example;
Fig. 6 illustrates a method of processing a contract document according, according to an example;
Fig. 7 is a schematic diagram illustrating nested clustering of approved segments, according to an example
Fig. 8 illustrates a data-structure according to an example;
Fig. 9 illustrates a method of processing a contract document according to an example; and
Fig. 10, illustrates a method of clustering approved segments, according to an example.

### DETAILED DESCRIPTION OF CERTAIN EMBODIMENTS

Examples address some of the limitations of automating the generation and assessment of contract documents, including the processing of received clauses. A contract document may be segmented into a plurality of segments which may each comprise a clause or part of a clause. In some examples, a risk reduction approach is employed which uses similarity of a segment under consideration to previously approved segments. By identifying previously approved segments which are similar to a received segment under consideration, processing of the received segment may be partly automated whilst reducing risk. For example, amendments to the received segment may automatically be proposed based on the most similar approved segment found. A risk score for the received segment may be determined based on risks scores for similar approved segments. The most similar approved segments may be displayed alongside the received segment, and may be sorted in different ways to assist with analysis and further processing. For example, sorting may be based on semantic distance or N-gram difference compared with the received segment, or popularity and/or recency of approved segments. These approaches assist a user to more quickly review a received contract and reduce risk associated with processing the contract document. Segments in any language may be processed, and the received segment and some of the approved segments may be in different languages.

Some examples utilize technical implementations arranged to enable real-time determination of similar approved segments as well as further processing of received segments. For example, pre-prepared clustering, nested clustering and semantic vector determinations for approved segments may be used to quickly determine approved segments similar to a received segment under consideration. Similarity may be based on a similarity metric between the approved segments and a received segment, for example a semantic distance, an N-gram difference or a similarity score.

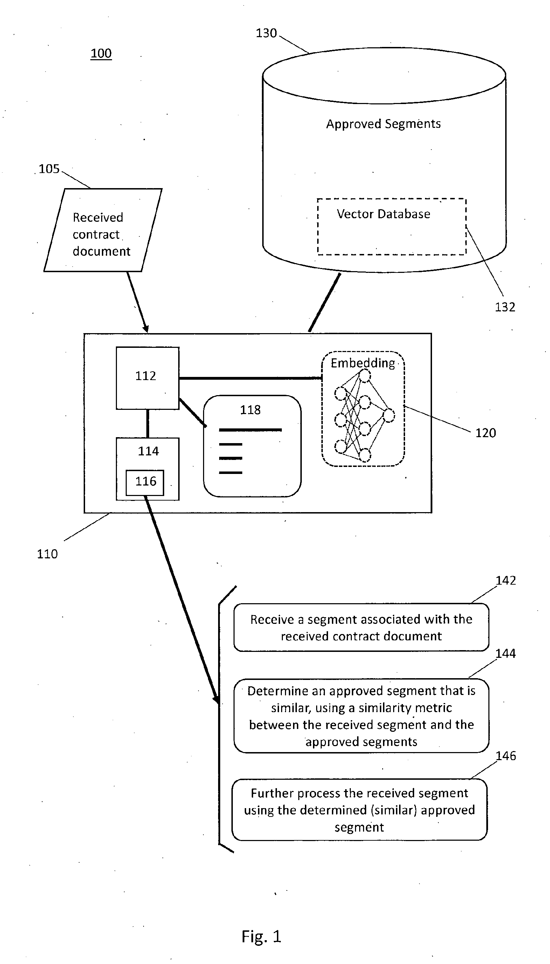

Fig. 1 a schematic diagram of a system 100 for processing documents, according to an example. The computer-implemented system 100 comprises a service provider 110 and a store 130 of approved segments coupled to the service provider 110. The service provider 110 may be a workstation or the backend of a webservice or other online service and comprises a processor 112 and memory 114 having a non-transitory computer readable medium 116 containing instructions 142-146. The instructions, when executed by the processor 112, cause the processor to perform a computer implemented method or process as described in more detail below. The service provider 110 may process one or more received contract documents 105.

The store 130 may be co-located with or part of the service provider or may be remote and or distributed. The store 130 may comprise a database and stores approved segments associated with a user, for example approved segments of a company which have been approved by a legal team of the company. The approved segments may be those from previously approved documents and/or newly generated by the company's legal department for example. A member of the company or a provider for the company may use the service provider 110 in order to process the received contract document for the company. The store 130 may comprise a vector database 132 which comprises semantic vector data associated with one or more of the approved segments.

The service provider 110 may have or may drive a display device 118 which is able to display the received segment, one or more approved segments, as well as other data or metadata as described in more detail below. The service provider 110 may also comprise a machine learning model 120 for determining a semantic vector for a segment, such as a received segment from the received contract document 105. The machine learning model 120 may alternatively (or additionally) be provided remotely and may be used to determine semantic vectors for the approved segments, for storage in a vector database 132 for example. The machine learning model 120 may be an internal model trained on company data or may be an external open-source model accessible by the service provider and/or the store 130. The service provider may additionally or alternatively comprise (or otherwise access) software for calculating an N-gram difference between segments.

The service provider 110 is configured to perform a computerized method for processing the received contract document 105 based on the following computer-readable instructions. A first instruction 142 is to receive a segment associated with the received contract document. The service provider 110 may simply receive a segment from an already segmented contract document, or the received contract document may be segmented using any suitable segmentation method.

A next instruction, 144 is to determine an approved segment or segments that is similar to the received segment. This may be achieved using a similarity metric such as a semantic distance, similarity score or N-gram differences between approved segments in the store 130 and the received segment.

A next instruction, 146, is to further process the received segment using the determined or similar approved segment(s). This could be implemented by displaying the received segment and the similar approved segment(s) so that a user may compare them visually. Other further processing options include highlighting differences (redlining) between the received segment and the similar segment(s), calculating and displaying a risk score for the received segment based on a distance or difference between this and the similar approved segment. Other further processing examples are described in more detail below.

By processing the received segment based on similar approved segments, the risks associated with approving or amending the received segment are reduced, as the similar approved segments have already been considered and therefore offer a shortcut to handling the received segment. For example, differences between the received segment and similar approved segments may be readily seen, enabling fast and simple generation of amendment proposals that align with or are close to already approved segments. This avoids the considerable time commitment needed for having to completely re-assess each segment for risk and company compliance requirements. The automation of some contract document processing reduces costs, increases throughput and leverages work already completed on earlier contract document processing.

The corpus or library of approved segments may be very large for some users, ranging upwards of thousands or even millions of examples. Technical methods and systems are described below which allow for real-time processing of contract documents using similarity metrics.

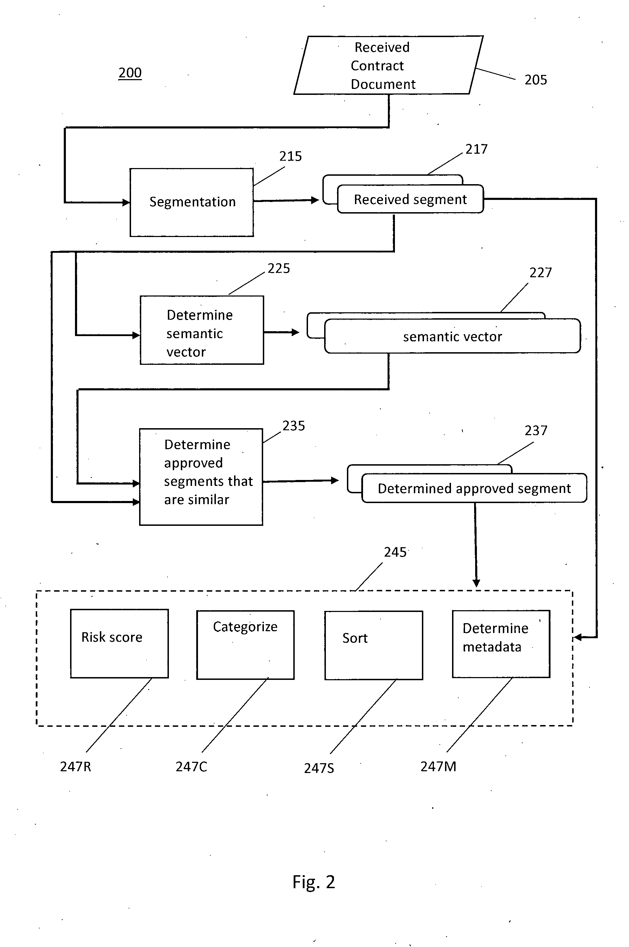

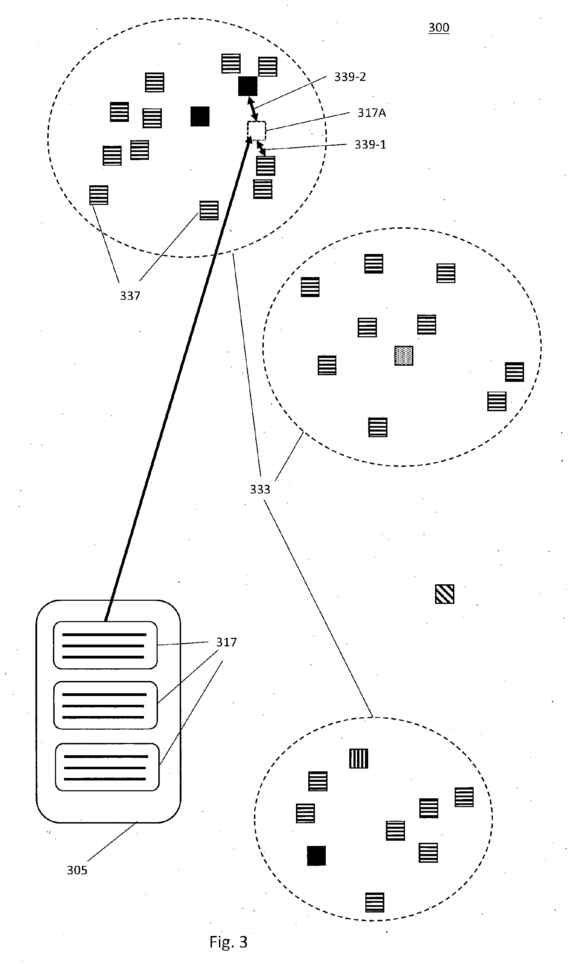

Fig. 2 and 3 illustrate how a contract document may be processed according to some examples. A received contract document 205, 305 is segmented into received segments 217, 317 by a segmenting process 215. The received segments correspond to clauses or parts of clauses of the received contract document. Any suitable segmentation process may be employed, including for example a trained segmentation machine learning model, Aspose (www.aspose.com), or open-source solutions such as LexNLP (https://github.com/LexPredict/lexpredict-lexnlp), nltk (https://www.nltk.org/) or Stanza (https://stanfordnlp.github.io/stanza/). Manual segmentation may also be used, for example where an operator marks the beginning of each segment by hand.

A received segment is then compared to previously approved segments using a similarity metric in order to determine or identify similar approved segments. This is illustrated in Fig. 3 which represents approved segments 337 as filled squares in a representative space 300. The representative space may be a semantic vector space or an N-gram difference space for example. Approved segments close to each other have a small similarity metric (semantic vector distance or N-gram difference) between them and segments distant from each other have a large similarity metric between them.

N-gram difference is the number of grams such as characters which differ between segments. For example, a segment "the buyer is responsible for transport costs" has an N-gram distance of 3 from "the buyer is responsible for transportation costs", where the difference is underlined. A Levenshtein distance may be used. Semantic distance provides another similarity metric based on differences in meaning between two segments. For example, the segments "the buyer is responsible for transport costs" and "the purchaser is responsible for transport costs" have a very similar meaning and so will have similar semantic vectors. The semantic vectors for each segment may be determined using a suitable trained machine learning model, for example an open-source model such as FastText (https://fasttext.cc/), Sen2Vec (https://pypi.org/project/sen2vec/).

The approved segments 337 may be grouped or clustered together into clusters 333 of segments having high similarity - for example small semantic distances or N-gram differences, or high similarity scores between them. Depending on the similarity metrics used, each cluster may correspond to segments or clauses of a particular type such as confidentiality or indemnity.

The approved segments 337 may also be categorized as a Master segment (square with black fill) or n Alternative segment (square with horizontal stripped fill). A Master segment is a template segment or clause (or part of a clause) approved and preferred by a user. This may be associated with a previous contract document or may have been independently generated by a legal department of the user for example. An Alternative segment is a clause (or part of a clause) has been extracted from an approved or signed contract document, for example via a segmentation process. Such an Alternative segment may have been provided by a third party and which was subsequently previously approved, for example by a legal department associated with the user. This core library of approved segments is clustered as described in more detail below. When a new segment is received, it is compared against the centroids of the clusters and categorized as follows:
- Master, if exactly the same as a Master segment in the core library;
- Alternative, if exactly the same as an Alternative segment in the core library;
- ~Master, if sufficiently similar to a Master segment in the core library (the level of similarity required may be a predetermined similarity metric such as an N-gram distance and/or a semantic distance);
- ~Alternative, if sufficiently similar to an Alternative segment in the core library, and/or too dissimilar to any Master segment (which would otherwise be categorized as -Master);
- Unknown, if not within a cluster or not sufficiently similar to a Master or Alternative segment in the core library.

A representation of a received segment 317A is illustrated as a dashed square with no fill. This received segment representation is close to a Master segment and an Alternative segment. The distance 339-1 or similarity metric to the Alternative segment is less than the distance 339-2 or similarity metric to the Master segment. Determining approved segments 337 which are similar to the received segment 317A may use similarity metrics 339-1, 339-2 between each or some of the approved segments as well as other factors such as the classification of the approved segments.

Whilst only a small number of approved segments 337 have been illustrated, in practice there may be thousands or tens of thousands of approved segments. Determining the distance or the similarity metric between each of these approved segments and a received segment may be require significant processing overhead and/or be time consuming. Therefore, some examples may use technical approaches to reduce the processing resources and/or time required, and in doing so may provide real-time or near real-time processing. In one example, a similarity metric between each cluster 333 and the received segment 317A may be used to find the closest cluster. This step is then followed by a comparison of approved segments within the closest cluster to the received segment. This approach effectively filters out all of the approved segments from consideration, apart from those of the closest cluster. This significantly reduces the number of similarity metric determines required between approved segments and the received segment, and may enable determining of similar approved segments in real-time. This technique and others are described in more detail below.

Referring also to Fig.2, a semantic vector 227 is determined for each received segment 217. The semantic vector 227 may be determined using a trained machine learning model 120 for example. Open-source models are also available, such as FastText, Sen2vec or AdaGram (https://github.com/lopuhin/python-adagram). These models generate a vector or a group of N values representing a segment in an N-dimensional representational semantic space.

The received segment 217 and its associated semantic vector 227 are used to determine approved segments 237 that are similar to the received segment 217. The determination process 235 uses a similarity metric between the received segment 217 and one or more approved segments - in this example the similarity metric is the semantic distance between them. This may be implemented by comparing the semantic vector of the received segment with semantic vectors of the approved segments.

The number of the closest approved segments 237 may be fixed, for example a predetermined number of closest approved segments, or simply any approved segments within a threshold similarity metric or distance. Other factors for selecting one or more approved segments may additionally or alternatively be used. Different similarity metric thresholds may be used for approved segments with different classifications. Other properties of nearby approved segments may also be considered, such as recency and/or popularity. For example, a threshold similarity metric for Master approved segments may be greater than a threshold similarity metric for Alternative approved segments. Properties such as popularity and recency may be associated with each approved segment, and the threshold similarity metric may be adjusted based on these properties.

Popularity is a metric which indicates how often the associated approved segment has been used or how many instances of this segment or very similar segments are present in the core library. A threshold number of the same or very similar segments may indicate a high popularity, whereas a segment with no other exact or similar instances may indicate a segment with low popularity. The level of similarity required when considering popularity may be set according to circumstances, for example a 98% similarity in terms of similarity score may be used, which may correspond to a 1% N-gram difference and/or semantic distance. Segments with high popularity may be associated with nested clustering sa described in more detail below. Recency is a metric which indicates how recently an approved segment has been used. An approved segment with a high popularity and a high recency may indicate that the approved segment has recently been used extensively. Using an approved segment with high recency may increase confidence that this approved segment complies with the latest company requirements or industry or market regulations whereas an approved segment with low recency may indicate that whilst it once complied with company policies or past regulations, that it may require checking to ensure that it still does.

In an example implementation, an approved segment with a high recency and/or high popularity may be included in a group or list of similar approved segments 237, even though it is further away that the threshold semantic distance used for approved segments with a lower recency.

Further processing 245 of the received segment 217 may be performed using the determined or similar approved segments 237. For example, a risk score process 247R may be performed to calculate and display a risk score for the received segment. The risk score may be based on the semantic distance between the received segment and one or more similar approved segments 237 and/or the classifications of the similar approved segments 237. An example risk score approach is described below.

A categorization process 247C may be used to categorize the received segment according to one of the previously described categories: Master, -Master, Alternate, -Alternate, Unknown. This may depend on the semantic distance between the received segment 217 and the approved segments 237, and their categorization. For example, a received segment that has the same semantic vector as an approved segment, that is a similarity metric of zero, may also be classified as Master.

A sorting process 247S may be used to sort the similar approved segments 237 according to some criteria. Example criteria include: the most similar, based on similarity metrics; classifications of the similar approved segments; recency of the similar approved segments; popularity of the similar approved segments; or some combination. The sorted similar approved segments 237 may then be displayed alongside the received segment, in order to a user with assessment of the received segment.

A metadata process 247M may be used to obtain and display metadata associated with the similar approved segments 237. For example, the originator of each similar approved segment 237 may be displayed, this may be the user's company or a third party for example. If a similar approved segment 237 is from the same third party as the received segment 217, this may indicate an amendment suggestion that may be acceptable to the third party, thereby reducing overall agreement time.

Whilst the above examples have been described using semantic vectors for determining a similarity metric between received and approved segments, N-gram difference may alternatively or additionally be used. In some examples, a two-stage similarity metric may be employed where similarity may be first based on semantic distance, and then segments within a threshold semantic distance are then assessed to determine the most similar based on N-gram difference. N-gram difference may be used where the objective is to minimize the amount of redlines (text changes) that would be required to turn the segment into an approved segment. This may be useful during contract review and negotiation.

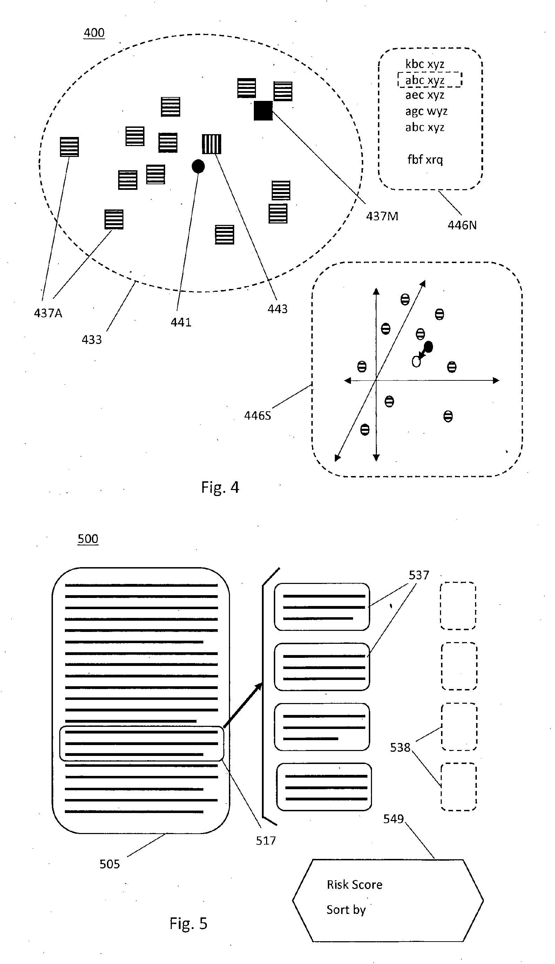

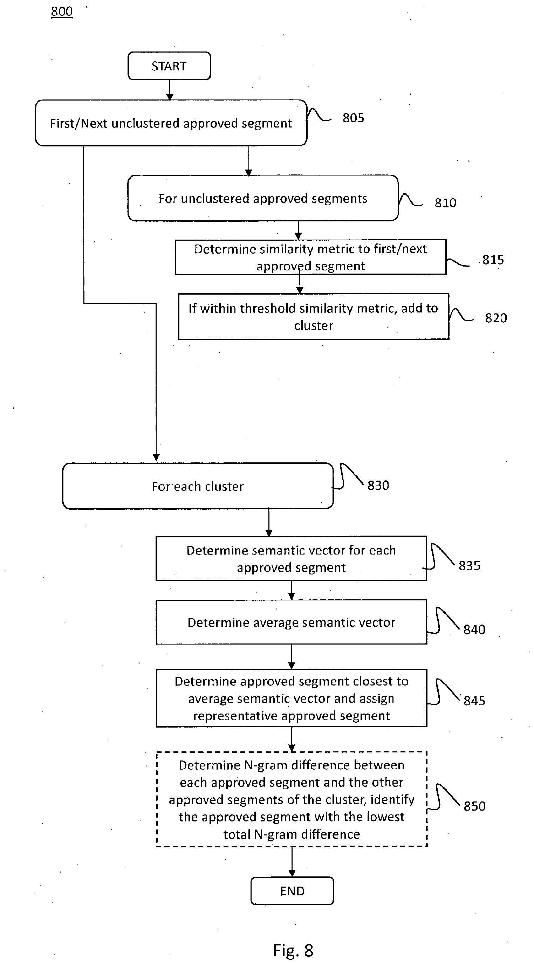

Fig. 4 illustrates clustering of approved segments. 437A, 437M. Clustering may be performed offline prior to processing a received segment. Various algorithms may be employed, for example K-means or DBSCAN clustering based on semantic vectors of the approved segments. In other examples, clustering may be based on a maximum similarity metric between approved segments of a cluster. For example, a starting approved segment is used as a seed to start a cluster 433 and all approved segments within a threshold semantic distance or N-gram difference are included in the cluster. If an approved segment is outside the threshold semantic distance, this may be used to start a new cluster. This method is described in more detail with reference to Fig. 8.

Example clustering based on semantic distance is illustrated in detail 446S which shows a 3D semantic representation space. A centroid 441 may be calculated based on the average of the semantic vectors in the cluster. Example clustering based on N-gram difference is illustrated in detail 446N which shows increasing N-gram difference from segment "abc xyz". A centroid may also be calculated for such a cluster, which may be an N-gram with a smallest aggregate N-gram difference from the other segments in the cluster. In both cases, the centroid may or may not coincide with an approved segment, but may be used to determine a distance or similarity metric between a received segment and the cluster. In an alternative approach, a representative segment 443 may be assigned to the cluster 433. The representative segment 443 may be the segment within the cluster 433 that is closest to the centroid 441. This representative segment can be used for determining a similarity metric between the received segment and the cluster.

Fig. 5 shows a display illustrating further processing. The display 500 includes a received contract document 505 segmented into received segments 517. For a selected received segment 517, similar approved segments 537 are also displayed. The similar approved segments 517 may be sorted based on various criteria such as distance from the selected received segment 517, classification, popularity and/or recency. Metadata 538 may also be displayed alongside the similar approved segments 537. The metadata may include segment origin, popularity, and/or recency.

Differences between the selected received segment 517 and the similar approved segments 537 may be highlighted or annotated. Amendments to the received segment 517 may be automatically proposed by selecting one of the similar approved segments 537. These may be shown as redline changes to the selected received segment 517. A received segment dashboard 549 may display a calculated risk score for the selected received segment 517 as well as options for sorting the similar approved segments 537.

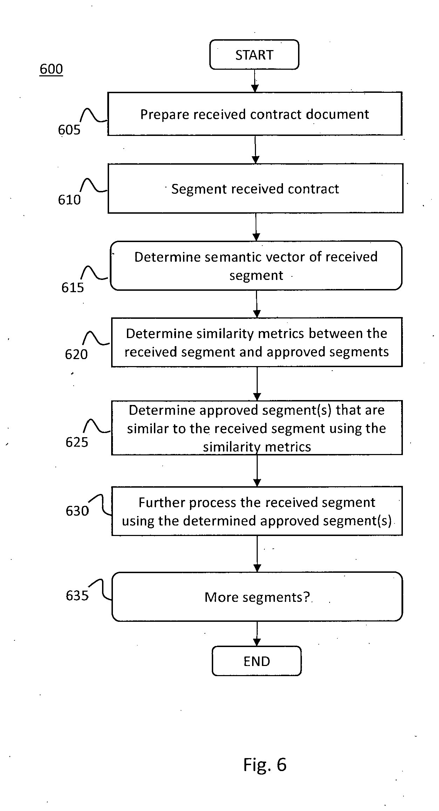

Fig. 6 is a flowchart of a method 600 of processing a contract document. The method may be implemented using the system 100, 200 of Fig. 1 or 2. Reference is also made to Fig. 3-5.

At 605, the method may prepare a contract document received in an arbitrary file format, layout and style. For example, a contract document 1.5, 205 may be a PDF image received from a supplier or other third party of a user. This may have been originally generated according to a contract template of the supplier, which may be quite different to that normally used by the user. The font type and size may be different, different conventions may be used for italicizing characters, the layout of text across a page may also be different as well as any other attributes. If the unstructured set of data, for example the contract document, is a PDF image, it may first be prepared by OCR'ing the image to generate individual characters in an electronic file format. This data may be converted into a common file format, such as Microsoft^{™} Word^{™}. Some unstructured sets of data may not require initial preparation, for example because they are already in a wanted common file.

At 610, the method segments the received contract document into received segments. Any suitable segmentation method may be employed, as previously described. Alternatively, the received contract document may already be segmented.

At 615, the method calculates or determines a semantic vector for one or more received segments of the received contract document. This may be achieved as previously described, for example using a machine learning model. The determination of a semantic vector for the received segment allows this to be compared with semantic vectors for approved segments. A similarity metric or semantic distance may then be determined between the received and approved segments. In other examples where N-gram difference is used as the similarity metric, this step 615 may be omitted.

At 620, the method determines similarity metrics between the received segment and at least some approved segments. Where semantic distance is used, the semantic vectors of the received and approved segments are compared to calculate the semantic distances between the received and approved segments. Where the similarity metric is N-gram difference, the N-gram differences between the received and approved segments are determined.

The similarity metrics between the received segment and all approved segments may be calculated in order to find the similar approved segments, however this approach is processing intensive and may be time consuming. Clustering of the approved segments may be used as previously described in order to reduce the processing and time requirements for this step. In some examples, a similarity metric to a representative segment (or centroid) of each cluster may be determined. Once the closest cluster has been determined, the similar approved segments may be determined from this cluster only. In some examples two types of similarity metric may be used, for example semantic distance for clustering then N-gram difference for similarity within the closest cluster. In some examples multiple similarity metrics may be used, for example a threshold semantic distance for clustering, a lower threshold semantic distance for identifying candidate similar approved segments within the closest cluster, and a threshold N-gram difference to determine the similar approved segments from the candidate segments. Other variations are possible, such as using N-gram difference first for candidate segments and then semantic distance to determine the similar approved segments. The clustering approach reduces the processing that would otherwise be required to determine similarity metrics for approved segments of the other clusters.

Where the similarity metric used is semantic distance, semantic vectors for the approved segments may be determined on the fly, however this is processor intensive. Therefore, semantic vectors for the approved segments may be determined in advance and stored for faster access by the method.

At 625, the method determines approved segments that are similar to the received segment using the determined similarity metrics. Various approaches may be used for determining the similar approved segments, such as a predetermined number of approved segments with the lowest similarity metric, or all approved segments within a threshold similarity metric, for example an N-gram difference of 5 grams or a semantic vector distance of 10. Other factors may also be used such as classification, where a greater similarity metric threshold may be allowed for Master segments than for Alternative or -Master segments. Similarly, approved segments with higher recency or popularity metrics may allow for a larger similarity metric threshold.

At 630, the method further processes the received segment using the determined similar approved segments. As previously described, this may simply involve displaying these segments together to facilitate user assessment. Other further processing may involve sorting the similar approved segments, redlining the received segment compared with a selected similar approved segment, classifying the received segment based on the similar approved segments and calculating a risk score for the received segment.

At 635, the method determines whether there are any more received segments, and if so repeats steps 615 - 630.

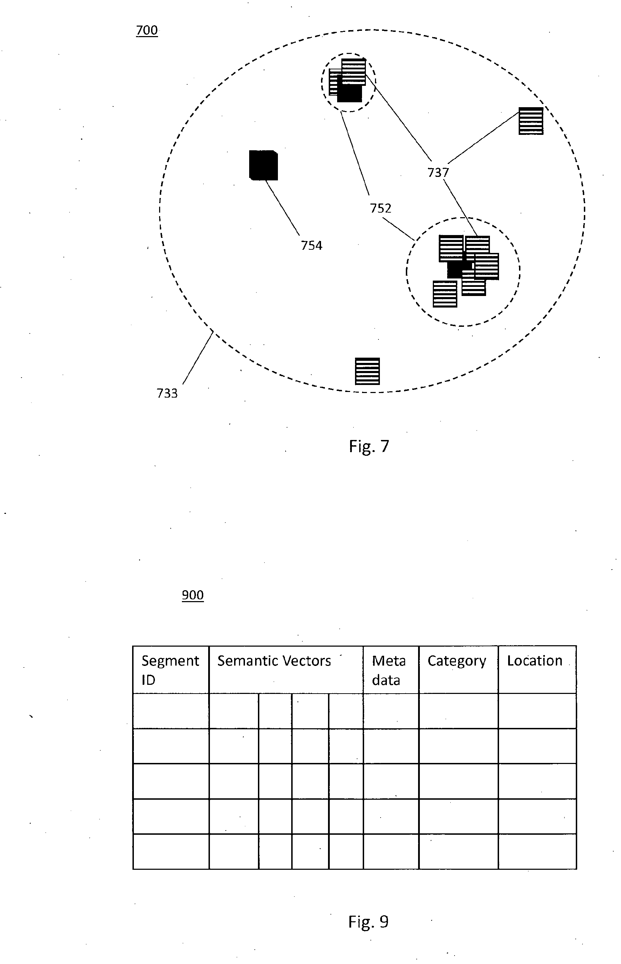

Fig. 7 illustrates the use of nested clustering for very similar approved segments within a cluster of approved segments. This approach may be used to further increase the processing speed for determining similar approved segments and also reduces the parsing burden on a user by reducing the number of approved segments to consider.

A cluster 733 of approved segments 737 is illustrated. The cluster 733 may comprise many thousands or even millions of approved segments, which makes navigation through approved segments difficult for a user and also may require significant computing resources to determine similar approved segments for a received segment. The cluster may comprise many examples of approved segments which are identical to each other - multiple identical approved segments are illustrated at 754. For the purposes of user navigation or determining similar approved segments, a single example of these approved segments 754 may be used as a nested representative approved segment.

The cluster 733 may also comprise many approved segments which are very similar to each other. For example, these approved segments may only differ in the use of different words having the same meaning, such as identical clause wording except for the use of "vendor" instead of "supplier". These very similar segments may be further clustered or nested into a nested cluster 752. A nested representative approved segment may be allocated to each nested cluster 752 in order to improve user navigation and reduce processing overhead for determining similar approved segments. The nested representative approved segment may be the approved segment closest to an average semantic vector of all the approved segments of the nested cluster 752. Consideration may also be given to other factors such as the classification of the approved segments within the nested cluster. For example, a Master approved segment may be preferred over a closer Alternative approved segment.

Nested clustering may be performed in a similar manner to clustering, for example using a maximum threshold semantic distance and/or N-gram difference between approved segments of the nested cluster 752. In one example, a semantic distance threshold of 20% may be employed for clustering, and an N-gram difference of 5 for nested clustering (or a semantic distance of 2% for nested clustering). Nested clustering may be based on both semantic distance and N-gram difference, for example to nest segments where the only difference is say "vendor" versus "supplier" (low semantic distance) or here the only difference is "vendor" versus "vendors" (low N-gram difference). Similarly, meeting a sematic distance threshold or an N-gram difference threshold may be used for clustering as well as determining similar approved segments or sorting or other post processing.

Fig. 8 is a flow chart for a method of clustering approved segments. This may be performed by a service provider 110 used to determine similar approved segments for a received segment, or a processing resource associated with a store 130 comprising the approved segments.

At 805, the method finds a first or next unclustered approved segment. This may be based on a random selection from all approved segments that have not already been clustered.

At 810 and 815, for each of the remaining unclustered approved segments, the method determines the similarity metric from these approved segments to the first/next approved segment. At 820, the method determines each whether these determined similarity metrics are within a threshold similarity metric, and if so assigns the corresponding approved segment to a cluster associated with the first/next approved segment. The threshold similarity metric may be a threshold semantic distance and/or a threshold N-gram difference.

Once all approved segments for this cluster have been identified and assigned to the cluster, the method reverts to 805 where a next approved segment is identified and the steps 810 - 820 repeated. The next approved, segment may also be determined randomly from the remaining unclustered approved segments. It may not be possible to cluster all approved segments and these may remain as unclustered outliers.

Once all unclustered segments have been considered, at 830 the method determines a representative approved segment for each cluster. At 835, the method determines a semantic vector for each approved segment within the current cluster. At 840, the method determines an average semantic vector for approved segments of the current cluster. At 845, the method determines an approved segment with a semantic vector closest to the average semantic vector for the current cluster. This is assigned as the representative approved segment for the current cluster. Other factors may be used to assign the representative approved segment, such as the classifications of the approved segments as previously described.

In other examples, at 850 the method may use N-gram difference between approved segments in each cluster, instead of or as well as semantic distance in order to determine the representative approved segment for each cluster.

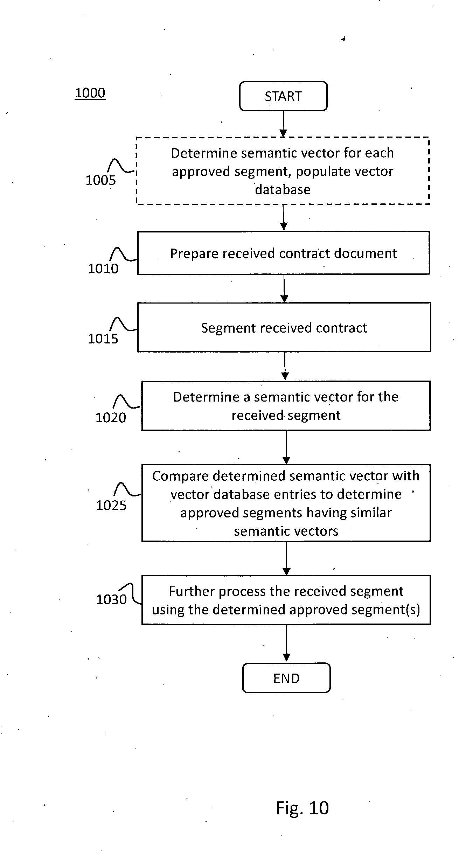

Fig. 9 illustrates a datastructure for storing information about approved segments. The datastructure 800 may be sorted or indexed in order to enable fast determination of similar approved segments as described below with respect to Fig. 10.

The datastructure 900 includes a Segment ID field to uniquely identify each approved segment. Semantic vector fields are provided for each approved segment, as well as a storage location in a store 130 for retrieving the corresponding approved segment, for example during further processing of a received segment. The datastructure 900 may also include metadata such as a precalculated risk rating, applicability instructions, or any other classification for each approved segment. Examples of other classifications may include segment usage (e.g. preferred versus fallback) or segment type (e.g. confidentiality, force majeure, indemnification).

Fig. 10 is a flowchart of a method 1000 of of processing a contract document. The method may be implemented using the system 100, 200 of Fig. 1 or 2.

At 1005, the method determines semantic vectors for each approved segment. This may be performed offline using a machine learning model and may be time consuming for large numbers of approved segments. These determined semantic vectors may be used to populate a vector database 132, for example using the previously described datastructure 900.

At 1010, the method prepares a received contract document. As described with reference to step 605, this may involve OCR, formatting and other similar processes to obtain a standardized version of the received contract document.

At 1015, the method segments the received contract document into received segments. This may be performed as previously described with reference to step 610. In other examples, the received segments may be provided without the need for segmenting in 915, The following steps may be performed for each received segment and may be performed "online" rather than offline. This approach enables real-time interaction with a user.

At 1020, the method determines a semantic vector for the received segment. This may be performed as previously described with reference to step 610, for example using a trained machine learning model 120.

At 1025, the method compares the determined semantic vector for the received segment with the vector database entries to find similar approved segments. The vector database may be sorted on semantic vector values. This allows a range of semantic vector values within the database which are similar to the determined semantic vector for the received segment to be quickly found. The vector database may be indexed in various ways to improve searching speed for finding similar approved segments. Example indexing approaches may include exact indexing, approximate nearest neighbor (ANN) indexing or group-based indexing.

At 1030, the method further processes the received segment using the determined/similar approved segments. This may be performed as previously described with reference to step 630. Any further received segments may then be processed using steps 1020 - 1030.

An example risk scoring calculation may be based on a weighted average of risk factors of a predetermined number of the closest Master approved segment, weighted by inverse similarity metric. In another example the risk score may be calculated based on the risk factor of closest Master approved segment multiplied by the corresponding similarity metric (eg semantic distance between the closest Master approved segment and the received segment) and a scaling factor. Similar approaches may be used where the closest approved segments are -Master, Alternative or -Alternative approved segments. A combination of the risk scores of approved segments of different classes may be used, with these being weighted differently according to similarity metric between them and the received segment as well as their classification.

An example risk scoring algorithm comprises:
Master segment = very low risk
-Master segment = low risk
Alternative segment = medium risk
-Alternative segment = high risk
Unknown segment = very high risk
Other risk scoring algorithms may alternatively be used.

Clustering and/or nested clustering and/or categorization of approved segments may be recalculated regularly, for example daily. This helps improve accuracy and performance of the system.

At least some aspects of the embodiments described herein with reference to Figures 1-10 comprise computer processes performed in processing systems or processors. However, in some examples, aspects of the invention may also extend to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

In the preceding description, for purposes of explanation, numerous specific details of certain examples are set forth. Reference in the specification to "an example" or similar language means that a particular feature, structure, or characteristic described in connection with the example is included in at least that one example, but not necessarily in other examples.

The above examples are to be understood as illustrative. It is to be understood that any feature described in relation to any one example may be used alone, or in combination with other features described, and may also be used in combination with one or more features of any other of the examples, or any combination of any other of the examples. Furthermore, equivalents and modifications not described above may also be employed.

## Claims

1. A computer-implemented method of processing contract documents; the method comprising:
receiving a segment associated with a received contract document;
for the received segment of the new contract document, accessing one or more approved segments to determine an approved segment from the one or more approved segments that is similar to the received segment, wherein the approved segment is determined using a similarity metric between the received segment and at least some of the approved segments;
using the determined approved segment for further processing of the received segment.

2. The method of claim 1, wherein the further processing comprises displaying one or more of the following: a risk score associated with the received segment; a classification of the received segment; an amendment suggestion for the received segment; a difference between the received segment and the determined approved segment; a third party associated with the determined approved segment.

3. The method of claim 1, wherein a plurality of determined approved segments are determined and the further processing comprises displaying the plurality of the determined approved segments sorted according to one or more of the following: an N-gram difference compared with the received segment; a semantic distance from the received segment; a classification of the determined approved segments; a recency of the determined approved segments; a popularity of the determined approved segments.

4. The method of claim 1, wherein a plurality of determined approved segments are determined and the further processing comprises calculating a risk score for the received segment based on one or more of the following: a similarity metric to one or more determined approved segment; a similarity metric to one or more determined approved segments having a first classification; a similarity metric to one or more determined approved segments having a second classification.

5. The method of claim 1, wherein a plurality of determined approved segments are determined and the further processing comprises generating amendment suggestions for the received segment based on one or more of the following: a recency of the determined approved segments; a popularity of the determined approved segments; a third party associated with the received segment.

6. The method of claim 1, wherein the similarity metric comprises one or more of: an N-gram difference between the received segment and the one or more approved segments; a semantic distance between the received segment and the one or more approved segments.

7. The method of claim 1, wherein the accessed one or more approved segments comprise a plurality of approved segments clustered into one or more clusters of approved segments, and wherein the one or more clusters of approved segments is used to determine the determined approved segment.

8. The method of claim 7, wherein determining the determined approved segment comprises:
identifying a closest cluster of approved segments using a similarity metric between the received segment and the clusters of approved segments; and
determining the determined approved segment using a similarity metric between the received segment and one or more approved segments within the closest cluster of approved segments.

9. The method according to claim 8, wherein identifying the closet cluster of approved segments comprises using a representative segment of each cluster of approved segments to determine the similarity metrics between the received segment and the clusters of approved segments.

10. The method according to claim 9, wherein the representative segment of a said cluster is one or more of the following: the segment of the cluster having a semantic vector closest to an average of respective semantic vectors of the segments of the cluster; the segment of the cluster having a least number of N-gram differences compared with other segments of the cluster; an approved segment of the cluster having a predetermined classification.

11. The method of claim 7, wherein the plurality of approved segments are clustered into clusters of approved segments using one or more of the following: a predetermined maximum semantic vector distance between approved segments of the cluster; a predetermined maximum N-gram difference between approved segments of each cluster.

12. The method of claim 7, wherein the plurality of approved segments are clustered into one or more nested clusters of approved segments within the one or more of the clusters of approved segments; and wherein the one or more nested clusters of approved segments are used to determine the determined approved segment.

13. The method of claim 12, wherein the one or more nested clusters are associated with a respective nested representative approved segment; and wherein the nested representative approved segments are used to determine the determined approved segment.

14. The method according to claim 13, wherein the nested representative segment of a said cluster is one or more of the following: the segment of the nested cluster having a semantic vector closest to an average of respective semantic vectors of the segments of the nested cluster; the segment of the nested cluster having a least number of N-gram differences compared with other segments of the nested cluster; a segment of the nested cluster having a predetermined classification.

15. The method of claim 13, wherein determining the determined approved segment comprises using a similarity metric between the received segment and the nested representative approved segment of one or more nested clusters of approved segments within the closest cluster of approved segments.

16. The method of claim 13, comprising notifying a user when a similarity metric between the nested representative approved segment and the other approved segments of a nested cluster exceeds a threshold.

17. The method of claim 1, wherein determine an approved segment from the one or more approved segments that is similar to the received segment comprises determining a semantic vector for the received segment and comparing the semantic vector for the received segment to semantic vectors for the one or more approved segments.

18. The method of claim 18, wherein the accessed one or more approved segments are associated with respective semantic vectors stored in a database.

19. A system for processing contract documents, the system having a processor and memory comprising processor readable instructions which when executed on the processor, cause the processor to:
receive a segment associated with a received contract document;
for the received segment of the new contract document, access one or more approved segments to determine an approved segment from the one or more approved segments that is similar to the received segment, wherein the approved segment is determined using a similarity metric between the received segment and at least some of the approved segments;
further process the received segment using the determined approved segment.

20. A non-transitory computer-readable medium storing a program for transforming an unstructured set of data to a structured set of data, the computer-readable medium comprising instructions that, when executed by at least one processor, cause the at least one processor to:
receive a segment associated with a received contract document;
for the received segment of the new contract document, access one or more approved segments to determine an approved segment from the one or more approved segments that is similar to the received segment, wherein the approved segment is determined using a similarity metric between the received segment and at least some of the approved segments;
further process the received segment using the determined approved segment.
